(19) Europäisches Patentamt
European Patent Office
Office européen des brevets

(11) **EP 4 787 974 A1**

(12) **EUROPEAN PATENT APPLICATION**
published in accordance with Art. 153(4) EPC

(43) Date of publication:
**05.08.2026 Bulletin 2026/32**

(21) Application number: **23953789.7**

(22) Date of filing: **28.09.2023**

(51) International Patent Classification (IPC):
**H04W 52/02** (2009.01)

(52) Cooperative Patent Classification (CPC):
**H04W 52/02; Y02D 30/70**

(86) International application number:
**PCT/CN2023/122946**

(87) International publication number:
**WO 2025/065645 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **HE, Chuanfeng
  Guangdong 523860 (CN)**
• **XU, Weijie
  Guangdong 523860 (CN)**

(74) Representative: **Mewburn Ellis LLP
Aurora Building
Counterslip
Bristol BS1 6BX (GB)**

(54) **PPDU RECEIVING METHOD, PPDU SENDING METHOD, APPARATUS, DEVICE, AND STORAGE MEDIUM**

(57)    The present application relates to the field of wireless communications, and discloses a PPDU receiving method, a PPDU sending method, an apparatus, a device, and a storage medium. The method is executed by an electronic device, and comprises: receiving all or some of information domains of a first PPDU, wherein the all or some of the information domains comprise a first information domain, and the first information domain is used for indicating a target device type that receives the first PPDU. Optionally, target device types comprise: a WUR device and an AMP device.

Receive all or part of information fields of a first PPDU — 120

FIG. 15

**Description**

TECHNICAL FIELD

The present application relates to the field of wireless communication, and in particular, to a physical layer protocol data unit (PPDU) receiving method, a PPDU transmitting method, apparatuses, devices, and a storage medium.

BACKGROUND

With the increasing demand for applications in the fifth-generation (5G) mobile communication technology industry, especially with the adoption of Internet of Things (IoT) technology, the types of connected objects and application scenarios are increasing, which leads to higher requirements for the price and power consumption of communication terminals. Therefore, ambient power based IoT (ambient IoT, AMP IoT) devices, AMP devices for short, have been developed. The power required for the AMP devices to operate comes from ambient power harvesting, and the ambient power may be from wireless signals, solar power, thermal power, or the like.

In the relevant technologies, communication between an AMP device and a wireless access point (AP) in a WiFi system is supported.

SUMMARY

The present application provides a PPDU receiving method, a PPDU transmitting method, apparatuses, devices, and a storage medium, which may enable an AMP device and a wake-up receiver (WUR) in a WiFi system, to share the same PPDU format. The technical solutions include at least the following.

According to one aspect of embodiments of the present application, a PPDU receiving method is provided, which is performed by an AMP device or a WUR device, an electronic device has a first receiver and a main transceiver, and operating power consumption of the first receiver is less than operating power consumption of the main transceiver. The method includes:

receiving all or part of information fields of a first PPDU; where the all or part of information fields include a first information field, and the first information field is used to indicate a target device type for receiving the first PPDU.

In some embodiments, the target device type includes a first device type and a second device type. Optionally, the first device type is an AMP device and the second device type is a WUR device; alternatively, the first device type is a WUR device and the second device type is an AMP device.

According to another aspect of the embodiments of the present application, a PPDU transmitting method is provided, which is performed by an access point and includes:

transmitting a first PPDU, where the first PPDU includes a first information field, and the first information field is used to indicate a target device type for receiving the first PPDU.

In some embodiments, the target device type includes a first device type and a second device type. Optionally, the first device type is an AMP device and the second device type is a WUR device; alternatively, the first device type is a WUR device and the second device type is an AMP device.

According to another aspect of the embodiments of the present application, an electronic apparatus is provided, which includes:

a receiving module, configured to receive all or part of information fields of a first PPDU; where the all or part of information fields include a first information field, and the first information field is used to indicate a target device type for receiving the first PPDU.

In some embodiments, the target device type includes a first device type and a second device type. Optionally, the first device type is an AMP device and the second device type is a WUR device; alternatively, the first device type is a WUR device and the second device type is an AMP device.

According to another aspect of the embodiments of the present application, an access point apparatus is provided, which includes:

a transmitting module, configured to transmit a first PPDU, where the first PPDU includes a first information field, and the first information field is used to indicate a target device type for receiving the first PPDU.

In some embodiments, the target device type includes a first device type and a second device type. Optionally, the first device type is an AMP device and the second device type is a WUR device; alternatively, the first device type is a WUR device and the second device type is an AMP device.

According to another aspect of the embodiments of the present application, an electronic device is provided, which includes:

a processor;

a receiver connected to the processor;

a memory configured to store executable instructions for the processor;

where the processor is configured to load and execute the executable instructions, to implement the PPDU receiving method in the above various aspects.

According to another aspect of the embodiments of the present application, an access point is provided, which includes:

a processor;

a transceiver connected to the processor; and

a memory configured to store executable instructions for the processor;

where the processor is configured to load and execute the executable instructions, to implement the PPDU transmitting method in the above various aspects.

According to another aspect of the embodiments of the present application, a chip is provided, the chip includes a programmable logic circuit and/or program instructions, and when the chip is executed, the chip is configured to implement the PPDU receiving method and/or the PPDU transmitting method as described in the above various aspects.

According to another aspect of the embodiments of the present application, a computer-readable storage medium is provided, where the computer-readable storage medium stores at least one program, the at least one program is loaded and executed by a processor, to implement the PPDU receiving method and/or the PPDU transmitting method as described in the above various aspects.

According to another aspect of the embodiments of the present application, a computer program product or a computer program is provided, where the computer program product or the computer program includes computer instructions, the computer instructions are stored in a computer-readable storage medium, a processor acquires the computer instructions from the computer-readable storage medium, and the processor executes the computer instructions to implement the PPDU receiving method and/or the PPDU transmitting method as described in the above various aspects.

The technical solutions provided in the embodiments of the present application may include the following beneficial effects.

By adopting a first information field to indicate a target device type for receiving the first PPDU, electronic devices with different device types may share the same PPDU format. Taking different device types including an AMP device and a WUR device as an example, the AMP device and the WUR device may share the same PPDU format, and when the AP transmits the first PPDU, it specifically indicates whether the first PPDU should be received by the AMP device or the WUR device, which improves compatibility of the WiFi system.

BRIEF DESCRIPTION OF THE DRAWINGS

To more clearly illustrate the technical solutions in the embodiments of the present application, the drawings to be used in the description of the embodiments will be briefly introduced below, and obviously, the drawings described below are only some embodiments of the present application. For those ordinary skilled in the art, other drawings may be obtained based on these drawings without creative efforts.

FIG. 1 illustrates a schematic diagram of a zero power consumption communication system provided in the relevant technologies.

FIG. 2 illustrates a schematic diagram of radio frequency power harvesting provided in the relevant technologies.

FIG. 3 illustrates a schematic diagram of a back scattering communication process provided in the relevant technologies.

FIG. 4 illustrates a schematic diagram of resistive load modulation provided in relevant technologies.

FIG. 5 illustrates a schematic diagram of encoding manners provided in the relevant technologies.

FIG. 6 illustrates a schematic diagram of a communication process of a zero power consumption Internet of Things device provided in the relevant technologies.

FIG. 7 illustrates a schematic diagram of a receiver system provided in the relevant technologies.

FIG. 8 illustrates a message format diagram of a PPDU provided in the relevant technologies.

FIG. 9 illustrates a message format diagram of a data field provided in the relevant technologies.

FIG. 10 illustrates a message format diagram of a frame control field in a media access control (MAC) frame header provided in the relevant technologies.

FIG. 11 illustrates a message format diagram of a wake-up signal provided in the relevant technologies.

FIG. 12 illustrates a schematic diagram of a principle of on-off keying (OOK) modulation provided in the relevant technologies.

FIG. 13 illustrates a schematic diagram of a principle of OOK modulation provided in the relevant technologies.

FIG. 14 illustrates a schematic diagram of a principle of multi-carrier on-off keying (MC-OOK) modulation provided in the relevant technologies.

FIG. 15 illustrates a flowchart of a PPDU receiving method provided in an exemplary embodiment of the present application.

FIG. 16 illustrates a flowchart of a PPDU transmitting method provided in an exemplary embodiment of the present application.

FIG. 17 illustrates a schematic diagram of masking a first sequence as a second sequence provided in an exemplary embodiment of the present application.

FIG. 18 illustrates a message structure diagram of a data field provided in an exemplary embodiment of the present application.

FIG. 19 illustrates a message structure diagram of a MAC header field provided in an exemplary embodiment of the present application.

FIG. 20 illustrates a message structure diagram of a frame control field provided in an exemplary embodiment of the present application.

FIG. 21 illustrates a block diagram of a PPDU transmitting apparatus provided in an exemplary embodiment of the present application.

FIG. 22 illustrates a block diagram of a PPDU receiving apparatus provided in an exemplary embodiment of the present application.

FIG. 23 illustrates a schematic diagram of a structure of an electronic device provided in an exemplary embodiment of the present application.

FIG. 24 illustrates a schematic diagram of a structure of an access point provided in an exemplary embodiment of the present application.

## DETAILED DESCRIPTION

To make the purposes, technical solutions, and advantages of the present application clearer, the implementations of the present application will be described in further detail below in conjunction with the drawings. Exemplary embodiments will be described in detail here, examples of which are illustrated in the drawings. In a case where the following description relates to the drawings, unless otherwise indicated, the same numbers in different drawings represent the same or similar elements. The implementations described in the following exemplary embodiments do not represent all implementations consistent with the present application. Rather, they are merely examples of apparatuses and methods consistent with some aspects of the present application as detailed in the appended claims.

The terms used in the present application are for the purpose of describing particular embodiments only and not intended to limit the present application. Singular forms such as "a", "the", and "this/that" used in the present application and the appended claims are intended to include the plural forms as well, unless the context clearly indicates otherwise. It should also be understood that the term "and/or" as used herein refers to and includes any or all possible combinations of one or more associated listed items.

It should be understood that although the terms such as first, second, third, etc., may be used in the present application to describe various information, such information should not be limited to these terms. These terms are only used for distinguishing information with the same type from one another. For example, without departing from the scope of the present application, first information may also be referred to as second information, and similarly, the second information may also be referred to as the first information. Depending on the context, the word "if" as used here may be interpreted as "when", "while/upon", or "in response to determining".

The technical solutions described in some embodiments of the present application may be applicable to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), and wireless fidelity (WiFi), a 5th-generation (5G) system, a cellular Internet of Things system, a cellular passive Internet of Things system, and may also be applicable to an evolution system subsequent to the 5G NR system, and also applicable to a 6th-generation (6G) system and subsequent evolution systems.

It should be understood that in some embodiments of the present application, "5G" may also be referred to as "5G NR" or "NR".

It should be understood that in the description of the embodiments of the present application, the term "corresponding/correspond/correspondence" may indicate that there is a direct or indirect correspondence between two items, or may indicate that there is an association between two items, or that there is a relationship of indicating and being indicated, configuring and being configured, or the like.

In the embodiments of the present application, the "pre-defined/predefined" may be implemented by pre-saving corresponding codes, tables or other manners that may be used to indicate related information, in the device (for example, including the terminal device and the network device), and the present application does not limit its specific implementation. For example, the predefined may refer to what is defined in a protocol.

In the embodiments of the present application, the "protocol" may refer to standard protocols in the communication field, for example, may include an LTE protocol, an NR protocol, and related protocols applied in future communication systems, which are not limited to the present application.

The electronic device involved in the embodiments of the present application may be an active device, and the active device refers to a device that has its own power supply and can actively generate and transmit a signal, such as a mobile phone, a computer, a smart watch, a smart bracelet, etc.

It may also be a passive device, and the passive device is a device that does not require a power supply or can operate by receiving power from other devices, which may be referred to as a zero power consumption device, a zero power consumption terminal, a low power consumption device, a low power consumption terminal, or the like.

It may also be a device that obtains power from the environment, which may be referred to as an ambient power Internet of Things device.

It may also be a device deployed in a fixed location, which may be referred to as a zero power consumption station, a low power consumption station, or the like.

It may also be a station (STA) with a WUR in a WiFi system.

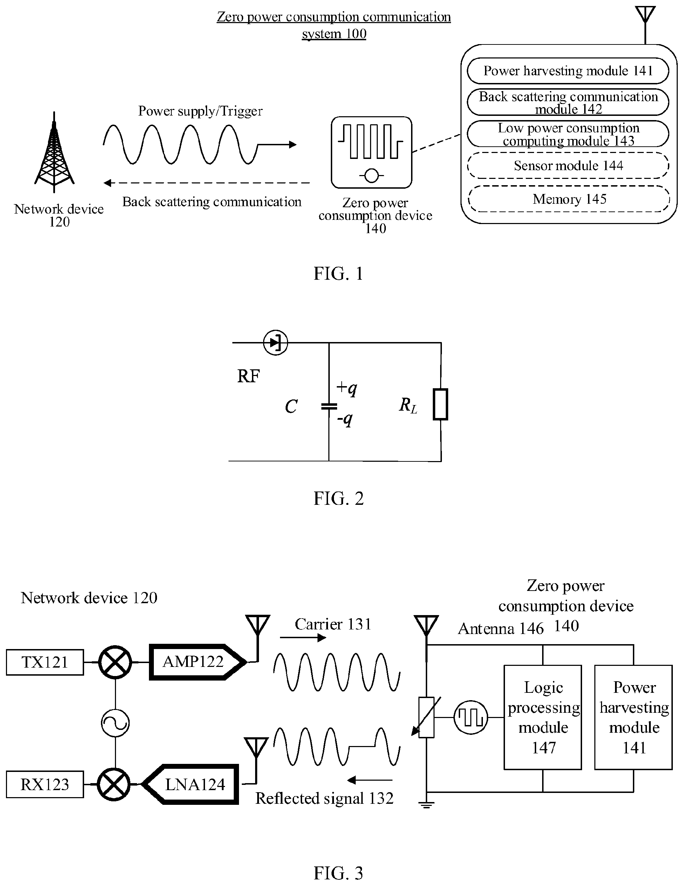

FIG. 1 illustrates a schematic diagram of a zero power consumption communication system 100 provided in the relevant technologies. The zero power consumption system 100 includes a network device 120 and a zero power consumption device 140.

The network device 120 is configured to transmit a wireless power-supply signal, a downlink communication signal to the zero power consumption device 140, and receive a back scattering signal from the zero power consumption device 140. The zero power consumption device 140, also referred to as an ambient power Internet of Things (Ambient power enabled Internet of Things, Ambient IoT) device, includes a power harvesting module 141, a back scattering communication module 142, and a low power consumption computing module 143. The power harvesting module 141 may harvest power carried by radio waves (wireless signals) in space to drive the low power consumption computing module 143 of the zero power consumption device 140 and to implement back scattering communication. After obtaining power, the zero power consumption device 140 may receive control signaling from the network device 120 and transmit data to the network device 120 based on back scattering according to the control signaling. The transmitted data may come from data stored in the zero power consumption device 140 itself (e.g., an identity identifier, or pre-written information such as production date, brand or manufacturer of a product).

The zero power consumption device 140 may further include a sensor module 144 and a memory 145. The sensor module 144 may include various types of sensors, and the zero power consumption device 140 may report data collected by various sensors based on the zero power consumption mechanism. The memory 145 is configured to store some basic information (e.g., an object identifier, etc.) or to acquire sensing data such as ambient temperature and ambient humidity, etc.

The zero power consumption device 140 does not require a battery itself, and at the same time, may adopt the low power consumption computing module 143 to perform simple operations such as simple signal demodulation, decoding, encoding, and modulation, etc., therefore, the zero power consumption module only requires a very simple hardware design, which makes the zero power consumption device 140 very low in cost and small in size.

The network device 120 includes, but is not limited to: a cellular network device, such as a 5G/6G network device or a base station device; a WiFi/WLAN network device, such as an access point (AP), a router, a mobile access point, etc., where the mobile access point is, for example, a mobile phone.

The zero power consumption device 140 includes, but is not limited to, a handheld device, a wearable device, an in-vehicle device, or an Internet of Things device, etc., and the zero power consumption device 140 may be at least one of: a mobile phone, a pad, an e-book reader, a laptop, a desktop computer, a television, a game console, an augmented reality (AR) terminal, a virtual reality (VR) terminal, a mixed reality (MR) terminal, a wearable device, a handle, an electronic tag, or a controller, etc.

Next, the key technologies of the zero power consumption communication will be introduced.

• Radio frequency power harvesting:

FIG. 2 illustrates a schematic diagram of radio frequency power harvesting provided in the relevant technologies. The radio frequency power harvesting enables to harvest power from space electromagnetic waves, through electromagnetic induction utilizing an radio frequency (RF) module based on the principle of electromagnetic induction, and remaining a parallel connection of a capacitor C and a load resistor $R_L$, to obtain the power required for driving the operation of the zero power consumption device, such as a low power consumption demodulation module, a modulation module, a sensor, and a memory readout, etc. Therefore, the zero power consumption device does not require a traditional battery.

• Back scattering communication:

FIG. 3 illustrates a schematic diagram of a back scattering communication process provided in the relevant technologies. The zero power consumption device 140 receives a wireless signal carrier 131 transmitted from a transmitting (TX) module 121 of the network device 120 by using an amplifier (AMP) 122, modulates the wireless signal carrier 131, loads to-be-transmitted information by using a logic processing module 147, and harvests radio frequency power by using a power harvesting module 141. The zero power consumption device 140 uses antenna(s) 146 to radiate a modulated reflected signal 132; this information transmission process is referred to as back scattering communication. A receiving (RX) module 123 of the network device 120 receives the modulated reflected signal 132 by using a low noise amplifier (LNA) 124. The back scattering and load modulation functions are inseparable. The load modulation adjusts and controls a circuit parameter of an oscillation circuit of the zero power consumption device 140 according to a rhythm of a data stream, so that a parameter such as the impedance of the electronic tag changes accordingly, thereby completing the modulation process.

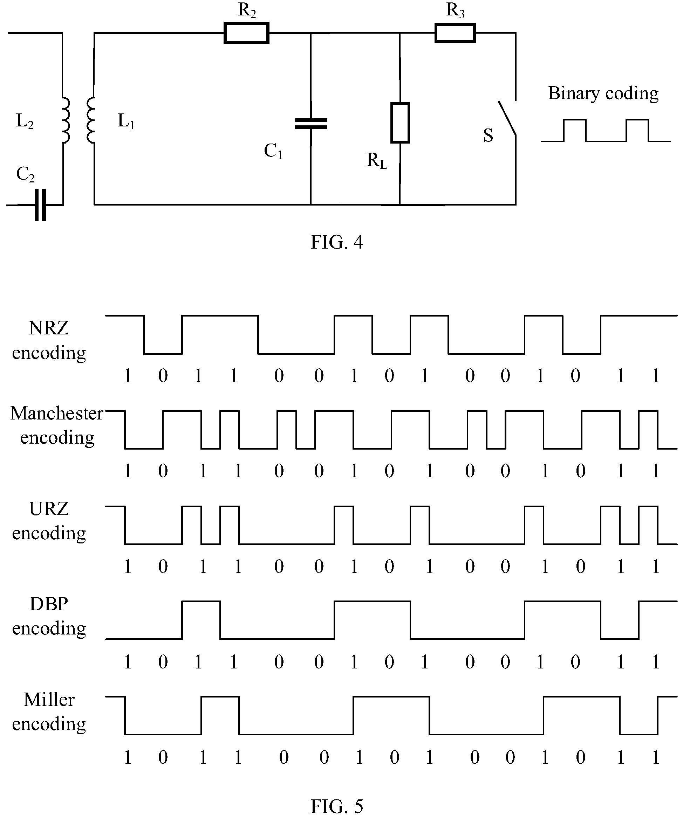

The load modulation technology mainly includes resistive load modulation and capacitive load modulation. FIG. 4 illustrates a schematic diagram of resistive load modulation provided in the relevant technologies. In the resistive load modulation, the load resistor $R_L$ is connected in parallel with a third resistor $R_3$, which is turned on or off by a switch S controlled by binary coding, the on and off of the third resistor $R_3$ cause a change in the voltage on the circuit, the load resistor $R_L$ is connected in parallel with a first capacitor C1, the load resistor $R_L$ is connected in series with a second resistor $R_2$, and the second resistor $R_2$ is connected in series with a first inductor $L_1$. The first inductor $L_1$ is coupled to a second inductor $L_2$, and the second inductor $L_2$ is connected in series with the second capacitor $C_2$. It may implement amplitude shift keying (ASK), that is, the signal modulation and transmission are implemented by adjusting the amplitude of the back scattering signal of the zero power consumption device. Similarly, in the capacitive load modulation, the resonant frequency of the circuit may be changed through on and off of the capacitor, thus implementing frequency shift keying (FSK), that is, the signal modulation and transmission are implemented by adjusting the operating frequency of the back scattering signal of the zero power consumption device.

The zero power consumption device performs information modulation on an incoming wave signal by means of load modulation, thus implementing the process of back scattering communication. The zero power consumption device has significant advantages, that is, it does not actively transmit a signal, thus it does not require a complex radio frequency link such as a power amplifier (PA) and a radio frequency filter, etc.; it does not actively generate a high-frequency signal, thus it does not require a high-frequency crystal oscillator; and by means of back scattering communication, the signal transmission does not consume the zero power consumption device's own power.

• Extremely low power consumption active transmission technology:

The zero power consumption device may also use the extremely low power consumption active transmission technology. Unlike the back scattering, in a case where the zero power consumption device transmits data by using the extremely low power consumption active transmission technology, the zero power consumption device requires to use a relatively simple and low power consumption oscillator to generate a radio frequency carrier, and then modulates to-be-transmitted information onto the radio frequency carrier. Based on the current research, the power consumption of the extremely low power consumption active transmitter may be as low as hundreds of microwatts, thus enabling data transmission with extremely low power consumption.

Next, encoding manners of the zero power consumption communication will be introduced.

FIG. 5 illustrates a schematic diagram of encoding manners provided in the relevant technologies. For data transmitted from an electronic tag, different forms of codes may be used to represent binary "1" and "0". A wireless radio frequency identification system typically uses one of the following encoding methods: not return to zero (NRZ) encoding, Manchester encoding, unipolar return to zero (URZ) encoding, differential binary phase (DBP) encoding, Miller encoding, and differential encoding. That is, different pulse signals may be used to represent 0 and 1.

• The NRZ encoding: the not return to zero encoding uses a high level to represent binary "1" and a low level to represent binary "0", and the NRZ encoding in FIG. 5 illustrates a schematic diagram of a level of binary data 101100101001011 encoded by using the NRZ method.
• The Manchester encoding: the Manchester encoding is also referred to as split-phase coding. In the Manchester encoding, a binary value is represented by the level change (rising or falling) over half a bit period within the bit length, a negative transition over half a bit period represents a binary "1", and a positive transition over half a bit period represents a binary "0", and the error of the data transmission means that when data bits transmitted simultaneously from multiple electronic tags are different values, the received rising edge and falling edge cancel each other out, resulting in an uninterrupted carrier signal throughout the entire bit length. In the Manchester encoding, there cannot be a state that remains unchanged in the bit length. The reader may use this error to determine a specific location where a collision occurred. The Manchester encoding is helpful in finding the error in the data transmission and is commonly used for the data transmission from the electronic tag to the reader in a case of using carrier load modulation or back scattering modulation. The Manchester encoding in FIG. 5 illustrates a schematic diagram of a level of the binary data 101100101001011 encoded by using the Manchester method.

- The URZ encoding: the unipolar return to zero encoding uses a high level in a first half of the bit period to represent binary "1", and a low level signal that lasts for the entire bit period to represent binary "1", and the URZ encoding in FIG. 5 illustrates a schematic diagram of a level of binary data 101100101001011 encoded by using the URZ method.

- The DBP encoding: the differential binary phase encoding represents binary "0" at any edge in half a bit period and binary "1" in a case where there is no edge. In addition, the level is inverted at the beginning of each bit period. For the receiver, bit beats are relatively easy to reconstruct. The DBP encoding in FIG. 5 illustrates a schematic diagram of the level of binary data 101100101001011 encoded by using the DBP method.

- The Miller encoding: the Miller encoding represents binary "1" at any edge in half a bit period, and binary "0" at an unchanged level in a next bit period. The bit period begins with a level alternation, for a receiver, bit beats are relatively easy to reconstruct. The Miller encoding in FIG. 5 illustrates a schematic diagram of a level of binary data 101100101001011 encoded by using the Miller method.

- The differential encoding; in the differential encoding, each binary "1" to be transmitted will cause a change in the signal level, and for binary "0", the signal level remains unchanged.

Next, classification of zero power consumption devices will be introduced.

Based on power sources and usage manners of zero power consumption devices, the zero power consumption devices may be divided into the following types.

• Passive zero power consumption device:

The zero power consumption device does not need an internal battery, and when the zero power consumption device approaches the network device, the zero power consumption device is located within a near field range formed by antenna radiation of the network device, and exemplarily, the network device is a reader of a radio frequency identification (RFID) system. Therefore, the antenna of the zero power consumption device generates an induced current through electromagnetic induction, and the induced current drives a low-power consumption chip circuit of the zero power consumption device. Demodulation of a forward link signal, and modulation of a reverse link signal and other operations are implemented. For the back scattering link, the zero power consumption device may transmit a signal by using the back scattering or an extremely low power consumption active transmitting method. The passive zero power consumption device does not need an internal battery to drive both the forward link and the reverse link, and is a true zero power consumption device. The passive zero power consumption device does not need a battery, and a radio frequency circuit and a baseband circuit are very simple, and for example, a low-noise amplifier (LNA), a power amplifier (PA), a crystal oscillator, an analog-to-digital converter (ADC) and other devices are not needed, therefore, the passive zero power consumption device has many advantages such as small size, light weight, very cheap price, and long service life, etc.

• Semi-passive zero power consumption device:

The semi-passive zero power consumption device is not equipped with a conventional battery itself, and may use a radio frequency power harvesting module to harvest radio wave power, and meanwhile, store the harvested power into a power storage unit, and exemplarily, the power storage unit is a capacitor. After obtaining the power, the power storage unit may drive a low-power consumption chip circuit of the zero power consumption device. Demodulation of the forward link signal, and modulation of the reverse link signal and other operations are implemented. For the back scattering link, the zero power consumption device may transmit a signal by the back scattering or an extremely low power consumption active transmitting method.

The semi-passive zero power consumption device does not need an internal battery to drive both the forward link and the reverse link, and the power stored in the capacitor used in the operation comes from the radio power harvested by the radio frequency power harvesting module, so it is also a true zero power consumption device. The semi-passive zero power consumption device inherits many advantages of the passive zero power consumption device, and for example, it has many advantages such as small size, light weight, very cheap price and long service life.

• Active zero power consumption device:

The zero power consumption device used in some scenarios may also be an active zero power consumption device, and such a zero power consumption device may have an internal battery. The battery is used to drive a low-power consumption chip circuit of the zero power consumption device. Demodulation of the forward link signal, and modulation of the reverse link signal and other works are implemented. However, for the back scattering link, the zero power consumption device may transmit a signal by using the back scattering implementation or an extremely low power consumption active transmitting method. Therefore, the zero power of such an active zero power consumption device is mainly reflected in the fact that the signal transmission of the reverse link does not need the zero power consumption device's own power, but uses the manner of the back scattering. In the active zero power consumption device, the built-in battery supplies power to an RFID chip to increase a reading/writing distance of the tag, thereby improving reliability of the communication. Therefore, it may be applied in some scenarios with relatively high requirements on aspects such as the communication distance, reading latency, etc.

Next, the classification of zero power consumption devices based on transmitter types will be introduced.

(1) Zero power consumption device based on back scattering:

This type of zero power consumption device transmits uplink data by using the above-mentioned manner of back scattering. This type of zero power consumption device does not have an active transmitter for the active transmission, but only has a transmitter for the back scattering. Therefore, when this type of zero power consumption device transmits uplink data, the network device needs to provide a carrier, and this type of zero power consumption device performs back scattering based on the carrier, to implement the uplink data transmission.

(2) Zero power consumption device based on an active transmitter:

This type of zero power consumption device uses an active transmitter with an active transmission capability for an uplink data transmission, therefore, when transmitting uplink data, this type of zero power consumption device may transmit the uplink data by using its own active transmitter, without the need for the network device to provide a carrier. The active transmitter applicable for the zero power consumption device may be, for example, an ultra-low power consumption ASK transmitter, an ultra-low power consumption FSK transmitter, etc., and based on current implementations, in a case where a signal of 100 $\mu$W is transmitted by this type of transmitter, its overall power consumption may be reduced to 400 $\mu$W to 600 $\mu$W.

(3) Zero power consumption device with both back scattering and an active transmitter:

The zero power consumption device may support both the back scattering and the active transmitter. The zero power consumption device may determine whether to use the back scattering or the active transmitter for an active transmission according to different situations (e.g., different power levels or different available ambient power levels) or based on the scheduling of the network device.

Next, the cellular Internet of Things will be introduced.

The cellular Internet of Things is booming, where the 3rd generation partnership project (3GPP) has standardized Internet of Things technologies such as narrowband Internet of Things (NB-IoT), machine-type communications (MTC), and reduced capability (RedCap), however, Internet of Things communication requirements in many scenarios remain unmet, as described below.

• Harsh communication environment:

Some Internet of Things scenarios may face extreme environments with high temperature, extremely low temperature, high humidity, high voltage, high radiation or high-speed movement, etc., such as an ultra-high voltage substation, high-speed train track monitoring, environment monitoring in a high-cold area, industrial production lines, etc. In these scenarios, IoT terminals will be unable to operate due to the limitations of the working environment of traditional power supplies. In addition, the extreme working environments are not conducive to the maintenance for the Internet of Things terminal device, such as replacement of the battery.

• Requirements for an extremely small size of terminal for:

Some Internet of Things communication scenarios, such as the food traceability, commodity circulation, and smart wearable, require terminals to have an extremely small size to facilitate the use in these scenarios. For example, Internet of Things terminal devices used for commodity management in the circulation process usually use the form of electronic tags, which are embedded in the commodity packaging in a very small form. For another example, lightweight wearable Internet of Things terminal devices may meet user needs while improving user experiences.

• Extremely low-cost Internet of Things communication requirements:

Numerous Internet of Things communication scenarios require the cost of Internet of Things terminal devices to be low enough, to improve their competitiveness with respect to other alternative technologies. For example, in logistics or warehousing scenarios, to facilitate the management of a large number of circulating goods, the Internet of Things terminal device may be attached onto each goods, so that the accurate management of the entire process and entire cycle of the logistics may be completed through the communication between the Internet of Things terminal device and the logistics network. These scenarios require the prices of Internet of Things terminal devices to be sufficiently competitive.

Therefore, to cover these unmet Internet of Things communication requirements, in the cellular Internet of Things, the Internet of Things with the ultra low cost, extremely small size, and free battery/free maintenance also needs to be developed, and the zero power consumption Internet of Things may just meet these requirements.

The zero power consumption Internet of Things, is also referred to as Ambient IoT or passive Internet of Things (passive IoT). The ambient IoT device refers to an IoT device that uses various ambient power for driving itself, such as wireless radio frequency power, light power, solar power, thermal power, mechanical power, and other ambient power. This type of device may have no power storage capability, or may have a very limited power storage capability (e.g., using a capacitor with a capacity of tens of $\mu$F). Compared to existing IoT devices, the ambient IoT device has many advantages, such as conventional battery-free, maintenance-free, small size, low complexity and low cost, and long life cycle, etc.

The zero power consumption Internet of Things may be used in at least the following four scenarios:

(1) object recognition, such as logistics, production line product management, and supply chain management;
(2) environmental monitoring, such as monitoring of temperature, humidity and harmful gas of the working environment and natural environment;
(3) positioning, such as indoor positioning, intelligent object finding, production line goods positioning, etc.; and
(4) intelligent controlling, such as intelligent control of various electrical appliances in smart home (turning on and off air conditioners, adjusting temperature), and intelligent control of various facilities in agricultural greenhouses (automatic irrigation and fertilization).

Next, the communication process of the ambient IoT device will be introduced.

In a future cellular passive Internet of Things, or WLAN passive Internet of Things, or ambient IoT device, an ambient IoT device (an electronic device) with a new type may be supported, thereby meeting the corresponding types of Internet of Things communication requirements in different application scenarios.

In practical deployment scenarios, in order to support the above electronic device, an AP with a capability to communicate with the electronic device is required. However, in some application scenarios, a large number of APs supporting traditional technologies have already been deployed, and in a case where these APs can support the electronic device that operates using ambient power, it is possible to maintain traditional communication functions while reducing power consumption during communication, making full use of the already deployed APs and reducing the consumption of material and financial resources.

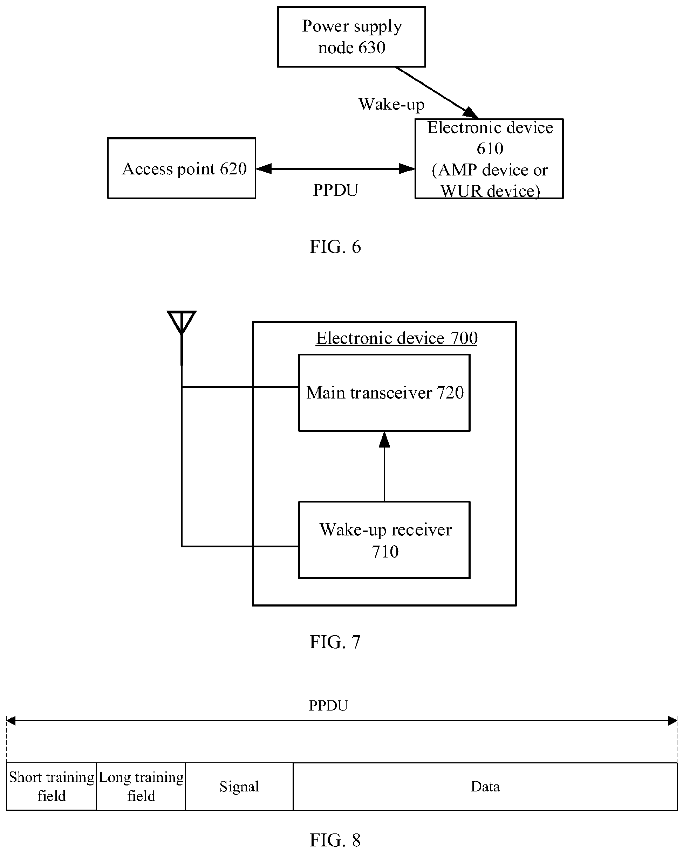

FIG. 6 illustrates a schematic diagram of a WiFi system provided in an exemplary embodiment of the present application. An electronic device 610 has a capability to communicate data with an access point 620 in a WiFi system. The electronic device 610 may be an ambient IoT device with the new type or an existing WUR device in the WiFi system. Deploying the Ambient IoT device on the WiFi system allows to make full use of existing network infrastructures and reduces network deployment costs.

However, since the access point 620 in the WiFi system typically does not have a function such as wireless power supply, etc., a new network node may be added and deployed, for example, a power supply node 630 in FIG. 6, which may also be referred to as an auxiliary node, configured to provide wireless power supply to the ambient IoT device.

Next, the wake-up receiver will be introduced.

FIG. 7 illustrates a schematic diagram of an electronic device 700 with a wake-up receiver provided in the relevant technologies. The electronic device 700 includes a wake-up receiver 710 and a main transceiver 720.

In some embodiments, the main transceiver 720 (or main radio) may be equally understood as a main transmitting and receiving signaling unit or a main air interface communication unit.

In some embodiments, the main transceiver 720 includes a receiver.

In some embodiments, the main transceiver 720 includes a receiver and a transmitter.

To further save power, the WUR is introduced to receive a power-saving signal. The wake-up receiver has features such as extremely low cost, extremely low complexity, and extremely low power consumption, and it mainly receives the power-saving signal through a manner of envelope-based detection. Therefore, the power-saving signal received by the wake-up receiver differs from a signal carried based on a physical downlink control channel (PDCCH) as defined by relevant standards in modulation manners and waveforms, etc. The power-saving signal is mainly an envelope signal obtained by ASK modulation of a carrier signal. Demodulation of the envelope signal may also be completed by driving a low power consumption circuitry with the power provided by the wireless radio frequency signal, so it may be passive. The wake-up receiver may also be active powered by an electronic device (e.g., a terminal device), and regardless of the power supply method, this receiver greatly reduces power consumption compared to traditional receivers, for example, the WUR may achieve power consumption less than 1 milliwatt, which is much lower than the power consumption of the main receiver, which is tens to hundreds of milliwatts. The wake-up receiver may be integrated with the electronic device, as an additional module of the receiver of the electronic device, or may be used separately as a wake-up function module of the electronic device.

FIG. 8 illustrates a message format diagram of a PPDU provided in the relevant technologies. The PPDU includes at least one of a physical layer header or a data section.

The physical layer header includes at least one of: a short training field (STF), a long training field (LTF), or a signal (SIGNAL).

The short training field consists of 10 short symbols, which are denoted as t1 to t10, each of the symbols is 0.8us. The short training field is used for implementing frame synchronization and coarse frequency synchronization. Here, t1 to t7 mainly include functions, such as signal detection, automatic gain control (AGC), and receiving antenna selection (Diversity Selection), and t8 to t10 mainly include functions, such as coarse frequency (Coarse Freq), offset estimation, and symbol timing synchronization.

The long training field is used for implementing fine frequency synchronization and channel estimation.

The signal section is used for carrying information related to the data section, including at least one of data transmission rate, packet length information, a reserved bit, or a tail bit.

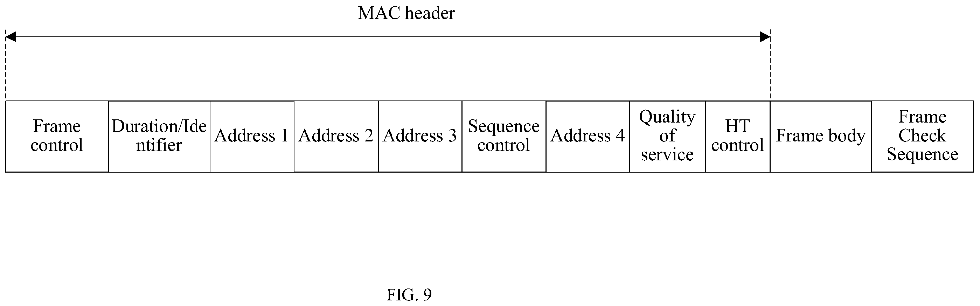

The data section is used for carrying a MAC frame. A frame format of the MAC frame includes at least one of an MAC header, a frame body, or a frame check sequence (FCS). A frame format of the data section may be illustrated in FIG. 9.

The frame body is used for storing transmitted or received information.

The frame check sequence is used for checking a data packet. The frame check sequence includes a 32-bit cyclic redundancy check (CRC).

The MAC header includes at least one of frame control, duration/identifier (ID), address 1, address 2, address 3, sequence control, address 4, quality of service (QoS) control, or high throughput (HT) control.

The duration/ID is used to indicate how long the frame and its acknowledgment frame will occupy a channel, and the duration value is used in calculation of the network allocation vector (NAV).

The address 1, address 2, address 3, or address 4 may be referred to as address fields. The address field includes at least one of: a destination address (DA), a source address (SA), a transmission station address (Transmitting Address, TA), a receiving station address (Receiving Address, RA), or a basic service set ID (BSS ID).

A sequence control field is used for filtering duplicate frames. The sequence control field includes at least one of an MAC server data unit (MSDU) and an MAC management server data unit (MMSDU). The MSDU consists of a 12-bit sequence number; the MMSDU consists of a 4-bit fragment number.

The service quality control is used for priority control. This field is valid or required to be included in a case where the data frame is a QOS data subtype.

The HT control is used for throughput control. This field is valid or required to be included in a case where the data frame is a high-throughput type.

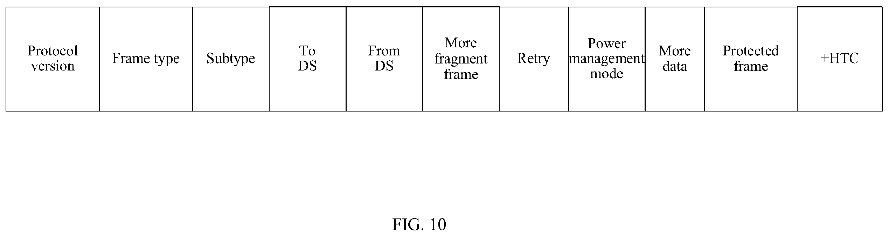

FIG. 10 illustrates a message format diagram of a frame control field in a MAC frame header provided in the relevant technologies. The frame control includes at least one of a protocol version, a frame type, a subtype, a to distribution system (To DS), a From DS, a more fragment frame, retry, a power management mode, more data, a protected frame, or +HTC.

A value of the protocol version is 0 or 1.

The frame type is used to indicate a type of the data frame. The frame type includes at least one of a control frame, a management frame, or a data frame. Here, the control frame is used for handshake communication and positive acknowledgment during a contention period, and used to end a non-contention period; the management frame is used for negotiation and relationship control between an station (STA) and an access point (AP), such as association, authentication, and synchronization; and the data frame is used for transmitting data during the contention period and the non-contention period.

The subtype is used to indicate a subtype of the data frame.

The To DS is used to indicate that the frame is transmitted from a BSS to a DS.

The From DS is used to indicate that the frame is transmitted from a DS to a BSS.

The more fragment frame is used to indicate a fragment situation of the frame. In response to the frame being a fragment frame of a frame, but not a last fragment frame of a frame, then the more fragment frame of that frame is set to 1.

The retry is used to indicate a retry situation of the fragment frame. That is, whether the frame is a fragment frame that has been transmitted previously.

More data is used to indicate buffering situation of the data frame in the station. In response to at least one data frame to be transmitted to the station, the more data of the frame is set to 1.

The protected frame is used to indicate an encryption situation of the frame body of the frame. In response to the frame body including encrypted data, the frame is set to 1; in response to the frame body not including encrypted data, the frame is set to 0.

The +HTC is an indication bit associated with the HT control.

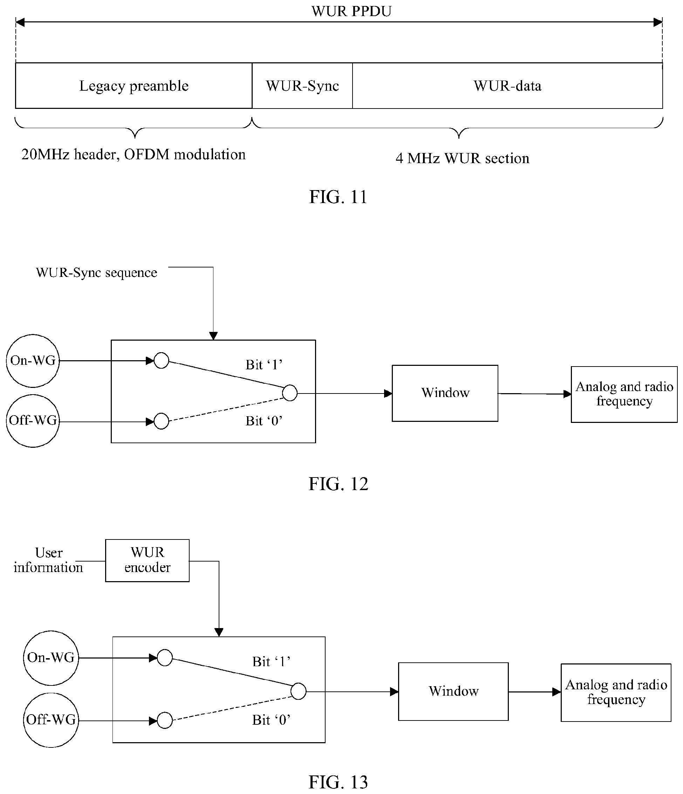

FIG. 11 illustrates a message format diagram of a wake-up signal provided in the relevant technologies. This wake-up signal may be referred to as a WUR wake-up frame. The relevant technologies use a WUR signal to achieve power saving of the electronic device. The AP notifies a WUR non-AP STA to perform a power saving operation through the WUR wake-up frame. The WUR wake-up frame is carried in a WUR PPDU.

In some embodiments, the WUR PPDU includes at least one of a legacy preamble, WUR-Sync, and WUR-data.

The legacy preamble is used for protecting the WUR-Sync and the WUR-data. The legacy preamble can improve compatibility, is a non-WUR part, and uses orthogonal frequency-division multiplexing (OFDM) modulation and a 20MHz bandwidth. The WUR-Sync is used for identifying and decoupling the WUR-data section. The WUR-data section is used for carrying a WUR physical layer service data unit (PSDU).

The WUR-Sync and the WUR-data use on-off keying (OOK) modulation and a 4MHz bandwidth.

The principle of the OOK modulation is to modulate the amplitude of the carrier signal to a non-zero value and a zero value. The non-zero value corresponds to On, and the zero value corresponds to Off, which are used for representing information bits. Meanwhile, the OOK may also be referred to as binary amplitude shift keying (2ASK). The principle of the OOK modulation is illustrated in FIG. 12.

The WUR-Sync sequence uses a predefined sequence W, and the sequence W includes 32 bits. Different WUR-Sync sequences indicate data rate used for different WUR-data.

Here, a WUR-Sync sequence corresponding to the WUR low data rate (LDR) is shown below:

$$W=[10100100101110110001011100111000]$$

A WUR-Sync sequence corresponding to WUR high data rate (HDR) is shown below:

$$W=[01011011010001001110100011000111]$$

Each bit in the WUR-Sync, after the OOK modulation is performed, will be mapped to an OOK symbol with a length $2\mu s$.

The WUR-data is used to carry user information, and after the user information is encoded by a WUR encoder, the OOK modulation may be performed, to form OOK symbols with the corresponding length, as illustrated in FIG. 13.

Here, the OOK symbol lengths corresponding to WUR LDR and WUR HDR are $4\mu s$ and $2\mu s$, respectively.

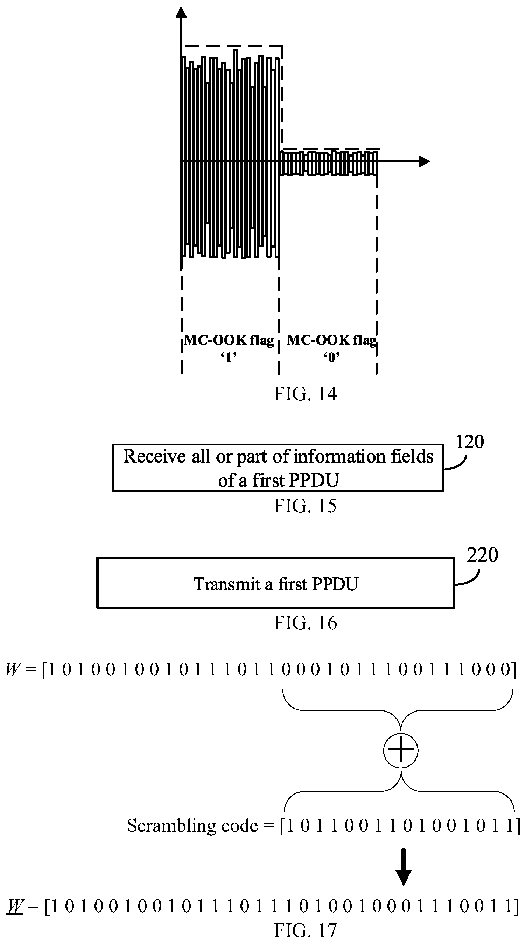

The above OOK signal is generated by multi-carrier (MC), so it may be referred to as an MC-OOK signal. The MC-OOK signal generated by the multi-carrier is illustrated in FIG. 14. In some embodiments, the MC-OOK signal is generated by multi-carrier modulation, such as by OFDM modulation. By mapping the corresponding amplitude values to multiple subcarriers in a frequency domain, a waveform of a time domain signal transformed by the inverse discrete Fourier transform (IDFT) is approximate to a waveform formed by amplitude shift keying (ASK) modulation, where bit 1 is represented by a high level of the signal and bit 0 is represented by a low level of the signal.

In the embodiments of the present application, it is assumed that downlink signals received by an AMP device and a WUR device have the same waveform, such as an OOK waveform. Based on this, the downlink signals received by the AMP device and the WUR device are designed to have a unified format, such as a PPDU format.

To achieve a unified PPDU format, an AMP PPDU received by the AMP device also uses the WUR PPDU format. The AMP device and the WUR device may determine whether they need to receive a current PPDU, according to indication information carried in a first information field in the WUR PPDU.

FIG. 15 illustrates a flowchart of a PPDU receiving method provided in an exemplary embodiment of the present application. This embodiment is illustrated by taking an example where the method is performed by an electronic device. The method includes as following.

**In step 120,** receive all or part of information fields of a first PPDU; where the all or part of information fields include a first information field, and the first information field is used to indicate a target device type for receiving the first PPDU.

In some embodiments, the first PPDU is a PPDU shared by the AMP device and the WUR device.

In some embodiments, a PPDU format of the first PPDU is obtained based on a PPDU format of a WUR PPDU.

In some embodiments, an OOK waveform is used for the first PPDU.

The target device type includes at least two. This embodiment illustrates an example where the target device type includes a first device type and a second device type. Optionally, the first device type is an AMP device and the second device type is a WUR device; alternatively, the first device type is a WUR device and the second device type is an AMP device.

The first PPDU includes at least one information field. In some embodiments, similar to the WUR PPDU, the first PPDU includes at least one of: a legacy preamble, a synchronization field, and a data field. The synchronization field is the same as or similar to the WUR-Sync field, and the data field is the same as or similar to the WUR-data field.

In summary, in the method provided in the embodiments, the target device type for receiving the first PPDU is indicated by using the first information field, to enable electronic devices with different device types to share the same PPDU format. Taking different device types including the AMP device and the WUR device as an example, the AMP device and the WUR device may share the same PPDU format, and in a case where the AP transmits the first PPDU, it specifically indicates that the first PPDU should be received by the AMP device or the WUR device, which improves the compatibility of the WiFi system.

FIG. 16 illustrates a flowchart of a PPDU transmitting method provided in an exemplary embodiment of the present application. This embodiment is illustrated by taking an example where the method is performed by an AP. The method includes as following.

**In step 220,** transmitting a first PPDU, where the first PPDU includes a first information field, and the first information field is used to indicate a target device type for receiving the first PPDU.

In some embodiments, the first PPDU is a PPDU shared by the AMP device and the WUR device.

In some embodiments, a PPDU format of the first PPDU is obtained based on a PPDU format of a WUR PPDU.

In some embodiments, an OOK waveform is used for the first PPDU.

The target device type includes at least two. This embodiment illustrates an example where the target device type includes a first device type and a second device type. Optionally, the first device type is an AMP device and the second device type is a WUR device; alternatively, the first device type is a WUR device and the second device type is an AMP device.

The first PPDU includes at least one information field. In some embodiments, similar to the WUR PPDU, the first PPDU includes at least one of: a legacy preamble, a synchronization field, and a data field. The synchronization field is the same as or similar to the WUR-Sync field, and the data field is the same as or similar to the WUR-data field.

In summary, in the method provided in the embodiments, the target device type for receiving the first PPDU is indicated by using the first information field, to enable electronic devices with different device types to share the same PPDU format. Taking different device types including the AMP device and the WUR device as an example, the AMP device and the WUR device may share the same PPDU format, and in a case where the AP transmits the first PPDU, it specifically indicates that the first PPDU should be received by the AMP device or the WUR device, which improves the compatibility of the WiFi system.

Based on the embodiments of FIG. 15 and/or FIG. 16, possible design manners of the first information field above include at least one of the following manners.

In manner 1, the first information field is a synchronization field.

A sequence carried by the synchronization field indicates the target device type (which may be simply referred to as a device type) for receiving the first PPDU.

In manner 2, the first information field is an MAC header field.

Information carried in the MAC header field indicates the target device type for receiving the first PPDU.

For the manner 1, the first information field is the synchronization field.

In some embodiments, the synchronization field may use sequences with different lengths and/or values.

The synchronization field uses a first sequence, used to indicate that the target device type for receiving the first PPDU is the first device type.

The synchronization field uses a second sequence, used to indicate that the target device type for receiving the first PPDU is the second device type.

The first sequence and the second sequence are different sequences.

In some embodiments, the difference between the first sequence and the second sequence includes at least one of a difference in lengths or a difference in values.

In some embodiments, the second sequence is obtained based on the first sequence. That is, the second sequence is obtained by processing the first sequence. The processing manners include, but are not limited to, at least one of: cyclic shift, masking, or bit flipping.

In some embodiments, the second sequence is obtained by performing cyclic shift on the first sequence.

For example, for the first sequence W = [101001001011101100010111000111000], the first sequence is circularly shifted 6 bits to the right, to obtain the second sequence; the second sequence is: W = [111000101001001011101100010111000].

Here, the number of bits in the cyclic shift may be predefined by a communication protocol or configured by an AP.

In some embodiments, the second sequence is obtained by processing all or part of bits in the first sequence. The processing includes at least one of cyclic shift, masking, and bit flipping, where:

- the part of bits are first n bits sorted in the first sequence;
- the part of bits are last n bits sorted in the first sequence;
- the part of bits are a first subsequence in the first sequence, where the first sequence includes the first subsequence and a second subsequence, and the second subsequence is obtained by flipping the first subsequence; or
- the part of bits are a second subsequence in the first sequence, where the first sequence includes a first subsequence and the second subsequence, and the second subsequence is obtained by flipping the first subsequence.

Exemplarily, referring to FIG. 17, the first sequence is: W = [10100100101110110001011100111000].

After masking the last 16 bits of the first sequence with a scrambling code [1011001101001011], the second sequence W = [10100100101110111010010001110011] is obtained.

For another example, the first sequence includes a first subsequence and a second subsequence, the first subsequence is a sequence used for the synchronization field corresponding to LDR, and the second subsequence is a sequence used for the synchronization field corresponding to HDR. The first subsequence is a sequence with a 64-bit length that repeats a sequence W1 twice, and the second subsequence is a sequence W after bit flipping is performed on the sequence W1.

The second sequence includes a third subsequence and a fourth subsequence, the third subsequence is a sequence used for the synchronization field corresponding to LDR, and the fourth subsequence is a sequence used for the synchronization field corresponding to HDR. The third subsequence is obtained by performing at least one of the following processes on the first subsequence: cyclic shift, masking, and bit flipping; and/or the fourth subsequence is obtained by performing at least one of the following processes on the second subsequence: cyclic shift, masking, and bit flipping.

For the manner 2, the first information field is the MAC header field.

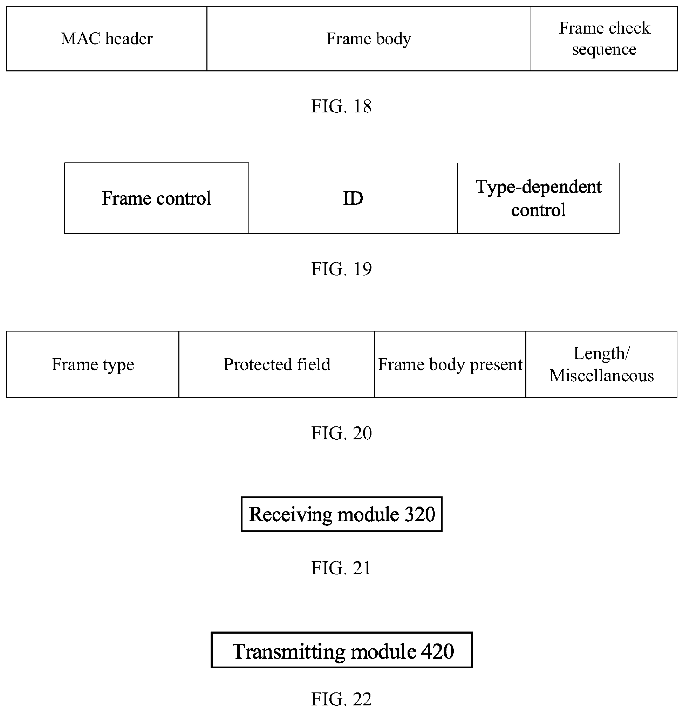

Exemplarily, referring to FIG. 18, the data field includes at least one of an MAC header field, a frame body field, and an FCS field. As illustrated in FIG. 19, the MAC header field includes a frame control field, an ID field, and a type-dependent control field.

Exemplarily, referring to FIG. 20, the frame control field includes at least one of: a type field, a protected field, a frame body present field, or length/miscellaneous. The type field is also referred to as a frame type field.

In the manner 2, an information field in the MAC header field may be used to indicate the target device type for receiving the first PPDU.

In some embodiments, the type field is used to indicate the target device type for receiving the first PPDU; in some embodiments, the ID field is used to indicate the target device type for receiving the first PPDU.

In some embodiments, the type field is used to indicate that:

the type field has a first value, used to indicate that the target device type for receiving the first PPDU is a first device type; or
the type field has a second value, used to indicate that the target device type for receiving the first PPDU is a second device type.

Exemplarily, the type field includes 3 bits, used to indicate a type of the frame. Table 1 shows a possible design for the type field:

Table 1

| Type | Type description |
|---|---|
| 000 | WUR broadcast (Beacon) |
| 001 | WUR wake-up |
| 010 | WUR vendor specific |
| 011 | WUR discovery |
| 100 | WUR short wake-up |
| 101 | AMP frame |
| 110 or 111 | Reserve |

Here, the value for indicating the AMP device is 101; the value for indicating the WUR device is any one of 000, 001, 010, 011, or 100. In other embodiments, the value for indicating the AMP device may also be 110 or 111.

In another possible design, the type field may further indicate a more specific type of the AMP frame, such as at least one of an AMP broadcast frame, an AMP data frame, or an AMP control frame, as shown in table 2 below:

Table 2

| Type | Type Description |
|------|------------------|
| 000 | WUR broadcast (Beacon) |
| 001 | WUR wake-up |
| 010 | WUR vendor specific |
| 011 | WUR discovery |
| 100 | WUR short wake-up |
| 101 | AMP broadcast |
| 110 | AMP data |
| 111 | AMP control |

It should be noted that the above table 1 and the above table 2 are merely illustrative. Portions of the rows in the above table 1 and the above table 2 may be implemented as an embodiment separately, and a portion of the rows in the above table 1 and a portion of the rows in the above table 2 may be combined to form a new embodiment, which will not be limited in the present application.

In some embodiments, the ID field is used to indicate that:

the ID field is a first ID, used to indicate that the target device type for receiving the first PPDU is a first device type, and the first ID is an ID maintained by a device with the first device type; or
the ID field is a second ID, used to indicate that the target device type for receiving the first PPDU is a second device type, and the second ID is an ID maintained by a device with the second device type.

In some embodiments, the ID field includes 12 bits. Table 3 shows IDs that the WUR device may maintain.

Table 3

| ID field | ID description |
|----------|----------------|
| Transmitter ID | Identifier of a transmitting AP |
| ID | Identifier of non-transmitted BSS ID |
| WUR Group ID | Identifier of a group of receiving WUR non-AP STAs |
| WUR ID | Identifier of an individual receiving WUR non-AP STA |
| OUI1 | The 12 LSBs of the OUI |

Here, the OUI is the abbreviation of organizationally unique identifier (Organizationally Inique Identifier).

In an example, the IDs in the above table 3 are all ID types maintained by the WUR non-AP STA (i.e., the WUR device), and in a case where an ID received by the WUR non-AP STA in the ID field is not an ID maintained by itself, the first PPDU will be discarded. In this example, the AP may allocate some IDs used for the AMP device, and in a case where an ID received by the AMP device in the ID field matches an ID used for the AMP device, it is considered that the first PPDU needs to be received; otherwise, the first PPDU is discarded.

In the above embodiments, the first device type is a WUR device; and the second device type is an AMP device. In the above embodiments, the first device type is an AMP device; and the second device type is a WUR device. The WUR device is an STA with a WUR, such as the WUR non-AP STA.

In summary, the PPDU transmitted from the AP to the AMP device and the WUR uses a uniform format, which may reduce the complexity of the system design. In the first PPDU, the target receiving device type of the first PPDU may be indicated by the sequence of the synchronization field or by the field in the MAC header, so that the AMP device may determine whether it is necessary to receive the first PPDU, and in a case it is not necessary to receive the first PPDU, the AMP may not continue to receive other parts of the first PPDU, thereby achieving the purpose of saving power.

FIG. 21 illustrates a block diagram of a PPDU receiving apparatus provided in an exemplary embodiment of the present application. The information receiving apparatus may be implemented as a part of an AMP device or a WUR device. The information receiving apparatus includes:

a receiving module 320, configured to receive all or part of information fields of a first PPDU; where the all or part of information fields include a first information field, and the first information field is used to indicate a target device type for receiving the first PPDU.

In some embodiments, the first PPDU is a PPDU shared by the AMP device and the WUR device.

In some embodiments, a PPDU format of the first PPDU is obtained based on a PPDU format of a WUR PPDU.

In some embodiments, an OOK waveform is used for the first PPDU.

The target device type includes at least two. This embodiment illustrates an example where the target device type includes a first device type and a second device type. Optionally, the first device type is an AMP device and the second device type is a WUR device; alternatively, the first device type is a WUR device and the second device type is an AMP device.

The first PPDU includes at least one information field. In some embodiments, similar to the WUR PPDU, the first PPDU includes at least one of: a legacy preamble, a synchronization field, and a data field. The synchronization field is the same as or similar to the WUR-Sync field, and the data field is the same as or similar to the WUR-data field.

In summary, in the apparatus provided in the embodiments, the target device type for receiving the first PPDU is indicated by using the first information field, to enable electronic devices with different device types to share the same PPDU format. Taking different device types including the AMP device and the WUR device as an example, the AMP device and the WUR device may share the same PPDU format, and in a case where the AP transmits the first PPDU, it specifically indicates that the first PPDU should be received by the AMP device or the WUR device, which improves the compatibility of the WiFi system.

FIG. 22 illustrates a flowchart of a PPDU transmitting method provided in an exemplary embodiment of the present application. This embodiment is illustrated by taking an example where a method is performed by an AP. The method includes the following steps:

a transmitting module 420, configured to transmit a first PPDU, where the first PPDU includes a first information field, and the first information field is used to indicate a target device type for receiving the first PPDU.

In some embodiments, the first PPDU is a PPDU shared by the AMP device and the WUR device.

In some embodiments, a PPDU format of the first PPDU is obtained based on a PPDU format of a WUR PPDU.

In some embodiments, an OOK waveform is used for the first PPDU.

The target device type includes at least two. This embodiment illustrates an example where the target device type includes a first device type and a second device type. Optionally, the first device type is an AMP device and the second device type is a WUR device; alternatively, the first device type is a WUR device and the second device type is an AMP device.

The first PPDU includes at least one information field. In some embodiments, similar to the WUR PPDU, the first PPDU includes at least one of: a legacy preamble, a synchronization field, and a data field. The synchronization field is the same as or similar to the WUR-Sync field, and the data field is the same as or similar to the WUR-data field.

In summary, in the apparatus provided in the embodiments, the target device type for receiving the first PPDU is indicated by using the first information field, to enable electronic devices with different device types to share the same PPDU format. Taking different device types including the AMP device and the WUR device as an example, the AMP device and the WUR device may share the same PPDU format, and in a case where the AP transmits the first PPDU, it specifically indicates that the first PPDU should be received by the AMP device or the WUR device, which improves the compatibility of the WiFi system.

Based on the embodiments of FIG. 21 and/or FIG. 22, possible design manners of the first information field mentioned above include at least one of the following manners.

In manner 1, the first information field is a synchronization field.

A sequence carried by the synchronization field indicates the target device type (which may be simply referred to as a device type) for receiving the first PPDU. For details, reference may be made to the above description, which will not be repeated.

In manner 2, the first information field is an MAC header field.

Information carried in the MAC header field indicates the target device type for receiving the first PPDU. For details, reference may be made to the above description, which will not be repeated.

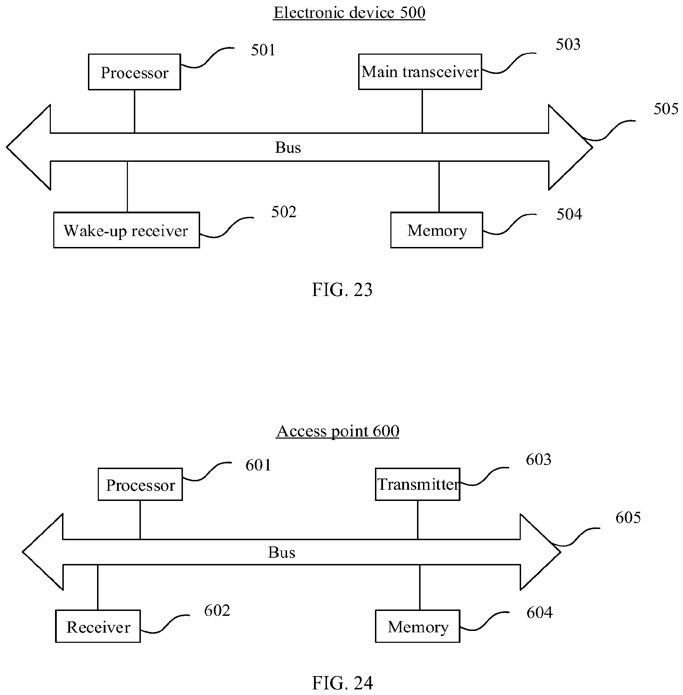

FIG. 23 illustrates a schematic diagram of a structure of an electronic device 500 provided in an exemplary embodiment of the present application, which includes: a processor 501, a wake-up receiver 502, a main transceiver 503, a memory 504, and a bus 505.

The processor 501 includes one or more processing cores, and the processor 501 performs various functional applications and information processing by running software programs and modules.

The wake-up receiver 502 and the main transceiver 503 may be implemented as a communication component, the communication component may be a communication chip, and the communication component may be referred to as a transceiver. In some embodiments, the wake-up receiver 502 may be configured to implement the functions and steps of the above receiving module 320, or the main transceiver 503 may be configured to implement the functions and steps of the above receiving module 320.

In some embodiments, the electronic device 500 further includes a wireless power harvesting circuit or a peripheral circuitry of the wake-up receiver 502.

The wireless power harvesting circuit is configured to harvest wireless power, and in a case where the wake-up receiver 502 and the main transceiver 503 are both turned off, the wireless power harvesting circuit remains in an operational state and continues to harvest wireless power.

The memory 504 is connected to the processor 501 through the bus 505.

The memory 504 may be configured to store at least one instruction, and the processor 501 is configured to perform the at least one instruction, to implement the various steps in the above method embodiments.

Furthermore, the memory 504 may be implemented by any type of volatile or non-volatile storage device or a combination thereof, the volatile or non-volatile storage device includes but is not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In some embodiments, the wake-up receiver 502 independently receives signals/data, or the processor 501 controls the wake-up receiver 502 to receive signals/data, or the processor 501 requests the wake-up receiver 502 to receive signals/data, or the processor 501 cooperates with the wake-up receiver 502 to receive signals/data.

In some embodiments, the main transceiver 503 independently transmits signals/data, or the processor 501 controls the main transceiver 503 to transmit signals/data, or the processor 501 requests the main transceiver 503 to transmit signals/data, or the processor 501 cooperates with the main transceiver 503 to transmit signals/data.

FIG. 24 illustrates a schematic diagram of a structure of an access point 600 provided in an exemplary embodiment of the present application, which includes: a processor 601, a receiver 602, a transmitter 603, a memory 604, and a bus 605.

The processor 601 includes one or more processing cores, and the processor 601 performs various functional applications and information processing by running software programs and modules.

The receiver 602 and the transmitter 603 may be implemented as a communication component, the communication component may be a communication chip, and the communication component may be referred to as a transceiver. In some embodiments, the transmitter 603 may be configured to implement the functions and steps of the above transmitting module 420.

The memory 604 is connected to the processor 601 through the bus 605.

The memory 604 may be configured to store at least one instruction, and the processor 601 is configured to perform the at least one instruction, to implement the various steps in the above method embodiments.

Furthermore, the memory 604 may be implemented by any type of volatile or non-volatile storage device or a combination thereof, the volatile or non-volatile storage device includes but is not limited to: a magnetic disk or an optical disk, an EEPROM, an EPROM, an SRAM, an ROM, a magnetic memory, a flash memory, and a PROM.

In some embodiments, the receiver 602 independently receives signals/data, or the processor 601 controls the receiver 602 to receive signals/data, or the processor 601 requests the receiver 602 to receive signals/data, or the processor 601 cooperates with the receiver 602 to receive signals/data.

In some embodiments, the transmitter 603 independently transmits signals/data, or the processor 601 controls the transmitter 603 to transmit signals/data, or the processor 601 requests the transmitter 603 to transmit signals/data, or the processor 601 cooperates with the transmitter 603 to transmit signals/data.

In the exemplary embodiments, a computer-readable storage medium is further provided, where the computer-readable storage medium stores at least one program, and the at least one program is loaded and executed by a processor, to implement the PPDU receiving method and/or the PPDU transmitting method provided in the above method embodiments.

In the exemplary embodiments, a computer program product or a computer program is further provided, where the computer program product or the computer program, when run on a processor, enables a communication device (the electronic device 500 or the access point 600) to perform the PPDU receiving method and/or PPDU transmitting method provided in the above method embodiments.

Those ordinary skilled in the art can understand that all or part of the steps of the above embodiments may be completed by hardware or completed by a program instructing related hardware, and the program may be stored in a computer-readable storage medium, the above-mentioned storage medium may be a read-only memory, a magnetic disk, an optical disk, or the like.

The above are merely optional embodiments of the present application and are not intended to limit the present application, and any modifications, equivalent substitutions, improvements, etc., made within the spirit and principles of the present application should be included within the protection scope of the present application.

**Claims**

1. A physical layer protocol data unit (PPDU) receiving method, comprising:
   receiving all or part of information fields of a first PPDU; wherein the all or part of information fields comprise a first information field, and the first information field is used to indicate a target device type for receiving the first PPDU.

2. The method according to claim 1, wherein the first information field is a synchronization field.

3. The method according to claim 2, wherein

   the synchronization field is a first sequence, used to indicate that the target device type for receiving the first PPDU is a first device type; or
   the synchronization field is a second sequence, used to indicate that the target device type for receiving the first PPDU is a second device type.

4. The method according to claim 3, wherein the second sequence is obtained based on the first sequence.

5. The method according to claim 4, wherein the second sequence is obtained by performing cyclic shift on the first sequence.

6. The method according to claim 4, wherein the second sequence is obtained by masking all or part of bits in the first sequence.

7. The method according to claim 6, wherein n is a positive integer,

   the part of bits are first n bits sorted in the first sequence;
   the part of bits are last n bits sorted in the first sequence;
   the part of bits are a first subsequence in the first sequence, wherein the first sequence comprises the first subsequence and a second subsequence, and the second subsequence is obtained by flipping the first subsequence; or
   the part of bits are a second subsequence in the first sequence, wherein the first sequence comprises a first subsequence and the second subsequence, and the second subsequence is obtained by flipping the first subsequence.

8. The method according to claim 2, wherein the first information field is a media access control (MAC) header field.

9. The method according to claim 8, wherein the MAC header field comprises a type field;

   the type field has a first value, used to indicate that the target device type for receiving the first PPDU is a first device type; or
   the type field has a second value, used to indicate that the target device type for receiving the first PPDU is a second device type.

10. The method according to claim 8, wherein the MAC header field comprises an identifier (ID) field;

    the ID field is a first ID, used to indicate that the target device type for receiving the first PPDU is a first device type, and the first ID is an ID maintained by a device with the first device type; or
    the ID field is a second ID, used to indicate that the target device type for receiving the first PPDU is a second device type, and the second ID is an ID maintained by a device with the second device type.

11. The method according to any one of claims 2 to 10, wherein

    the first device type is a wake-up receiver (WUR) device; and
    the second device type is an ambient power (AMP) device.

12. A physical layer protocol data unit (PPDU) transmitting method, performed by an access point, and comprising:
    receiving all or part of information fields of a first PPDU; wherein the all or part of information fields comprise a first information field, and the first information field is used to indicate a target device type for receiving the first PPDU.

13. The method according to claim 12, wherein the first information field is a synchronization field.

14. The method according to claim 13, wherein

the synchronization field is a first sequence, used to indicate that the target device type for receiving the first PPDU is a first device type; or

the synchronization field is a second sequence, used to indicate that the target device type for receiving the first PPDU is a second device type.

15. The method according to claim 14, wherein the second sequence is obtained based on the first sequence.

16. The method according to claim 15, wherein the second sequence is obtained by performing cyclic shift on the first sequence.

17. The method according to claim 15, wherein the second sequence is obtained by masking all or part of bits in the first sequence.

18. The method according to claim 17, wherein

the part of bits are first n bits sorted in the first sequence;

the part of bits are last n bits sorted in the first sequence;

the part of bits are a first subsequence in the first sequence, wherein the first sequence comprises the first subsequence and a second subsequence, and the second subsequence is obtained by flipping the first subsequence; or

the part of bits are a second subsequence in the first sequence, wherein the first sequence comprises a first subsequence and the second subsequence, and the second subsequence is obtained by flipping the first subsequence.

19. The method according to claim 13, wherein the first information field is a media access control (MAC) header field.

20. The method according to claim 19, wherein the MAC header field comprises a type field;

the type field has a first value, used to indicate that the target device type for receiving the first PPDU is a first device type; or

the type field has a second value, used to indicate that the target device type for receiving the first PPDU is a second device type.

21. The method according to claim 19, wherein the MAC header field comprises an identifier (ID) field;

the ID field is a first ID, used to indicate that the target device type for receiving the first PPDU is a first device type, and the first ID is an ID maintained by a device with the first device type; or

the ID field is a second ID, used to indicate that the target device type for receiving the first PPDU is a second device type, and the second ID is an ID maintained by a device with the second device type.

22. The method according to any one of claims 13 to 21, wherein

the first device type is a wake-up receiver (WUR) device; and

the second device type is an ambient power (AMP) device.

23. A physical layer protocol data unit (PPDU) receiving apparatus, comprising:
a receiving module, configured to receive all or part of information fields of a first PPDU; wherein the all or part of information fields comprise a first information field, and the first information field is used to indicate a target device type for receiving the first PPDU.

24. A physical layer protocol data unit (PPDU) transmitting apparatus, comprising:
a transmitting module, configured to transmit a first PPDU, wherein the first PPDU comprises a first information field, and the first information field is used to indicate a target device type for receiving the first PPDU.

25. An electronic device, comprising:

   a processor;
   a transceiver connected to the processor; and
   a memory configured to store executable instructions for the processor;
   wherein the processor is configured to load and execute the executable instructions, to implement the physical layer protocol data unit (PPDU) receiving method according to any one of claims 1 to 11.

26. An access point, comprising:

   a processor;
   a transceiver connected to the processor; and
   a memory configured to store executable instructions for the processor;
   wherein the processor is configured to load and execute the executable instructions, to implement the physical layer protocol data unit (PPDU) transmitting method according to any one of claims 12 to 22.

27. A computer-readable storage medium, wherein the computer-readable storage medium stores at least one program, the at least one program is loaded and executed by a processor, to implement the physical layer protocol data unit (PPDU) receiving method according to any one of claims 1 to 11, or the physical layer protocol data unit (PPDU) transmitting method according to any one of claims 12 to 22.

28. A computer program product, wherein the computer program product comprises computer instructions, the computer instructions are stored in a computer-readable storage medium, a processor acquires the computer instructions from the computer-readable storage medium, and the processor executes the computer instructions to implement the physical layer protocol data unit (PPDU) receiving method according to any one of claims 1 to 11, or the physical layer protocol data unit (PPDU) transmitting method according to any one of claims 12 to 22.

Zero power consumption communication
system 100

Power harvesting module 141

Back scattering communication
module 142

Low power consumption
computing module 143

Sensor module 144

Memory 145

Power supply/Trigger

Back scattering communication

Network device
120

Zero power
consumption device
140

**FIG. 1**

RF

$C$ $+q$ $-q$ $R_L$

**FIG. 2**

Network device 120

Zero power
consumption device

Antenna 146  140

Carrier 131

TX121  AMP122

RX123  LNA124

Reflected signal 132

Logic
processing
module
147

Power
harvesting
module
141

**FIG. 3**

FIG. 4

FIG. 5

Power supply
node 630

Wake-up

Access point 620

PPDU

Electronic device
610
(AMP device or
WUR device)

FIG. 6

Electronic device 700

Main transceiver 720

Wake-up receiver
710

FIG. 7

PPDU

| Short training field | Long training field | Signal | Data |
|---|---|---|---|

FIG. 8

| Frame control | Duration/Ide ntifier | Address 1 | Address 2 | Address 3 | Sequence control | Address 4 | Quality of service | HT control | Frame body | Frame Check Sequence |
|---|---|---|---|---|---|---|---|---|---|---|

FIG. 9

EP 4 787 974 A1

| Protocol version | Frame type | Subtype | To DS | From DS | More fragment frame | Retry | Power management mode | More data | Protected frame | +HTC |
| --- | --- | --- | --- | --- | --- | --- | --- | --- | --- | --- |

FIG. 10

WUR PPDU

| Legacy preamble | WUR-Sync | WUR-data |

20MHz header, OFDM modulation　　　　4 MHz WUR section

FIG. 11

WUR-Sync sequence

On-WG　　Bit '1'

Off-WG　　Bit '0'

Window

Analog and radio frequency

FIG. 12

User information

WUR encoder

On-WG　　Bit '1'

Off-WG　　Bit '0'

Window

Analog and radio frequency

FIG. 13

FIG. 14

MC-OOK flag '1' | MC-OOK flag '0'

Receive all or part of information fields of a first PPDU  120

FIG. 15

Transmit a first PPDU  220

FIG. 16

$W$ = [1 0 1 0 0 1 0 0 1 0 1 1 1 0 1 1 0 0 0 1 0 1 1 1 0 0 1 1 1 0 0 0]

⊕

Scrambling code = [1 0 1 1 0 0 1 1 0 1 0 0 1 0 1 1]

$\underline{W}$ = [1 0 1 0 0 1 0 0 1 0 1 1 1 0 1 1 1 0 1 0 0 1 0 0 0 1 1 1 0 0 1 1]

FIG. 17

| MAC header | Frame body | Frame check sequence |
|---|---|---|

FIG. 18

| Frame control | ID | Type-dependent control |
|---|---|---|

FIG. 19

| Frame type | Protected field | Frame body present | Length/ Miscellaneous |
|---|---|---|---|

FIG. 20

Receiving module 320

FIG. 21

Transmitting module 420

FIG. 22

Electronic device 500

Processor — 501

Main transceiver — 503

505

Bus

Wake-up receiver — 502

Memory — 504

FIG. 23

Access point 600

Processor — 601

Transmitter — 603

605

Bus

Receiver — 602

Memory — 604

FIG. 24

# EP 4 787 974 A1

## INTERNATIONAL SEARCH REPORT

International application No.

**PCT/CN2023/122946**

### A. CLASSIFICATION OF SUBJECT MATTER

H04W52/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN, IEEE: 物理层协议数据单元, 类型, 字段, 标识, 地址, 信息域, 报头, PPDU, ambient, bss, common, ID, MAC, type, wi?fi

### C. DOCUMENTS CONSIDERED TO BE RELEVANT

| Category* | Citation of document, with indication, where appropriate, of the relevant passages | Relevant to claim No. |
|---|---|---|
| X | US 2019007901 A1 (QUALCOMM INC.) 03 January 2019 (2019-01-03) description, paragraphs [0158]-[0166], and figures 3-6 | 1-28 |
| A | US 2021227529 A1 (NXP USA, INC.) 22 July 2021 (2021-07-22) entire document | 1-28 |
| A | US 2021392660 A1 (INTEL IP CORP.) 16 December 2021 (2021-12-16) entire document | 1-28 |
| A | WO 2022226441 A1 (QUALCOMM INC.) 27 October 2022 (2022-10-27) entire document | 1-28 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 June 2024** | **12 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122946**

| Patent document cited in search report | | | Publication date (day/month/year) | Patent family member(s) | | | Publication date (day/month/year) |
|---|---|---|---|---|---|---|---|
| US | 2019007901 | A1 | 03 January 2019 | TW | 201906453 | A | 01 February 2019 |
| | | | | WO | 2019006345 | A2 | 03 January 2019 |
| | | | | WO | 2019006343 | A1 | 03 January 2019 |
| | | | | US | 2019007904 | A1 | 03 January 2019 |
| | | | | TW | 201906452 | A | 01 February 2019 |
| US | 2021227529 | A1 | 22 July 2021 | | None | | |
| US | 2021392660 | A1 | 16 December 2021 | WO | 2019132980 | A1 | 04 July 2019 |
| | | | | IN | 202047010861 | A | 20 March 2020 |
| WO | 2022226441 | A1 | 27 October 2022 | TW | 202243503 | A | 01 November 2022 |
| | | | | KR | 20230172480 | A | 22 December 2023 |
| | | | | EP | 4327622 | A1 | 28 February 2024 |
| | | | | BR | 112023021070 | A2 | 12 December 2023 |
| | | | | US | 2022346187 | A1 | 27 October 2022 |
| | | | | JP | 2024516531 | A | 16 April 2024 |
| | | | | CN | 117158113 | A | 01 December 2023 |

Form PCT/ISA/210 (patent family annex) (July 2022)